(19) Europäisches Patentamt
European Patent Office
Office européen des brevets

(11) **EP 4 001 963 A1**

(12) **EUROPEAN PATENT APPLICATION**
published in accordance with Art. 153(4) EPC

(43) Date of publication:
**25.05.2022 Bulletin 2022/21**

(21) Application number: **19937749.0**

(22) Date of filing: **16.07.2019**

(51) International Patent Classification (IPC):
**G01S 15/10** (2006.01)    **G01S 7/526** (2006.01)

(52) Cooperative Patent Classification (CPC):
**G01S 7/526; G01S 15/10**

(86) International application number:
**PCT/JP2019/027904**

(87) International publication number:
**WO 2021/009840 (21.01.2021 Gazette 2021/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Aquafusion, Ltd.
Kobe-shi, Hyogo 650-0046 (JP)**

(72) Inventors:
• **SASAKURA, Toyoki
Kobe-shi, Hyogo 650-0046 (JP)**
• **MATSUO, Ikuo
Kobe-shi, Hyogo 650-0046 (JP)**
• **HORIE, Jun
Kobe-shi, Hyogo 651-0078 (JP)**

(74) Representative: **Grünecker Patent- und
Rechtsanwälte
PartG mbB
Leopoldstraße 4
80802 München (DE)**

(54) **UNDERWATER INFORMATION DISPLAY DEVICE**

(57)    An underwater information display device, which transmits an ultrasonic wave, receives an echo reflected by an underwater target, and displays the echo, includes: a transmission signal generation part that forms a transmission signal sequence in which at least two temporally adjacent transmission signals are converted so as to be identifiable at the time of reception and have different intervals; a transmission part that emits a transmission signal as an ultrasonic wave into water; a reception part that receives an echo and outputs a reception signal; a storage part that stores multiple reception signals corresponding to temporally continuous transmission signals; an interpolation part to which reception signals stored in the storage part are supplied and which replaces a ghost component included in the reception signals with an echo of another temporally nearby transmission signal; and a display part that draws reception signals including a signal interpolated by the interpolation part.

Fig. 7

## Description

Technical Field

The present invention relates to an underwater information display device that visualizes and displays information about underwater fishes, the seabed, or the like using ultrasonic waves.

Technical Background

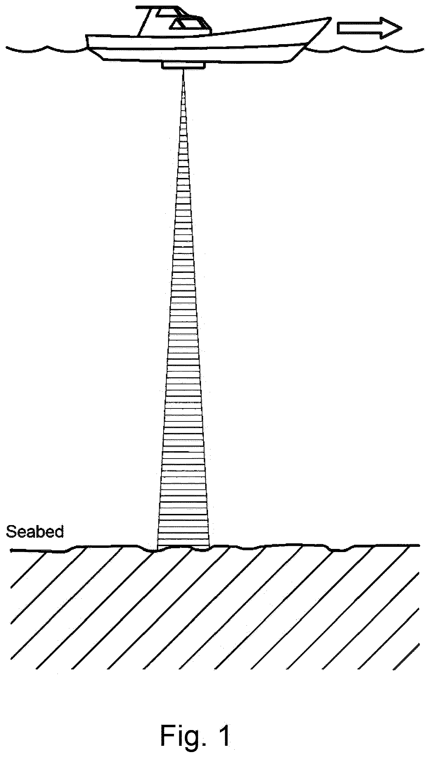

A fish finder is known as one of underwater information display devices. As illustrated in Fig. 1, a fish finder emits an ultrasonic wave into the water and receives a reflection ultrasonic wave from an underwater object that exists in the water (such as a fish or floating objects in the water) or the seabed and displays the reflection ultrasonic wave on a color liquid crystal display device or the like.

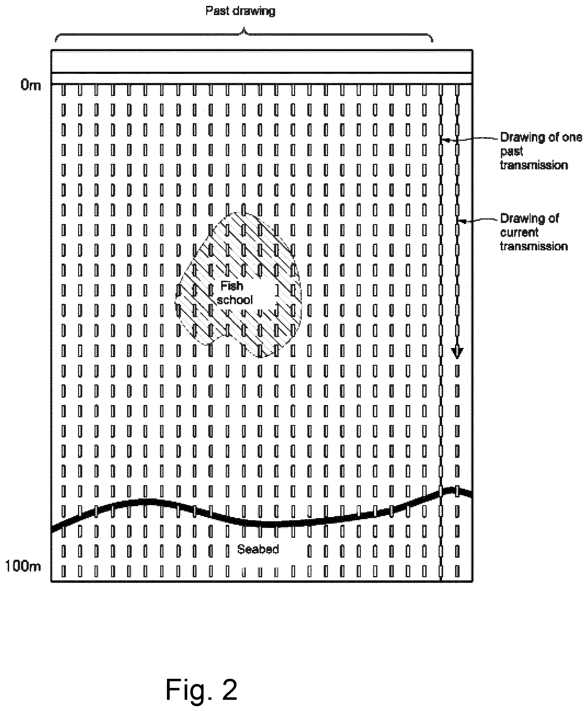

A display method of a fish finder is to color an upper right corner of a liquid crystal display screen as illustrated in Fig. 2 in proportion to the strength of a currently transmitted signal and color a returned echo according to an underwater ultrasonic speed in a downward direction. Previous transmission and reception signals are drawn on the left side of the current signal. Past transmission and reception signals are sequentially drawn on the left side, and underwater information of the sea that the ship has passed is displayed on one screen. In the example of Fig. 2, the straight line at the top shows the sea surface (transmission line), the line lying below is the seabed, and a fish school (indicated by a shaded region) is displayed between the sea surface and the seabed. The image in the screen is shifted to the left for each transmission, and the oldest display disappears from the screen.

A conventional fish finder transmits a short pulse, and the pulse signal propagates in the sea, and a weak reflection echo from an object (target) called a scatter in the sea such as a fish school or a relatively large reflection echo from the seabed is colored in proportion to the magnitude of the reflection signal and is displayed on the screen as one line. A transmission period thereof is such that, after a reflection echo returns from the seabed after a transmission, the next transmission is performed, and thus, cannot be shorter than a time obtained by dividing a round-trip distance to the seabed by an underwater sonic speed. For example, at a place having a depth of 150 m to the seabed, the transmission period cannot be shorter than 0.2 seconds, which is a value obtained by dividing a round-trip distance of 300 m thereof by an underwater sonic speed of 1500 m/s.

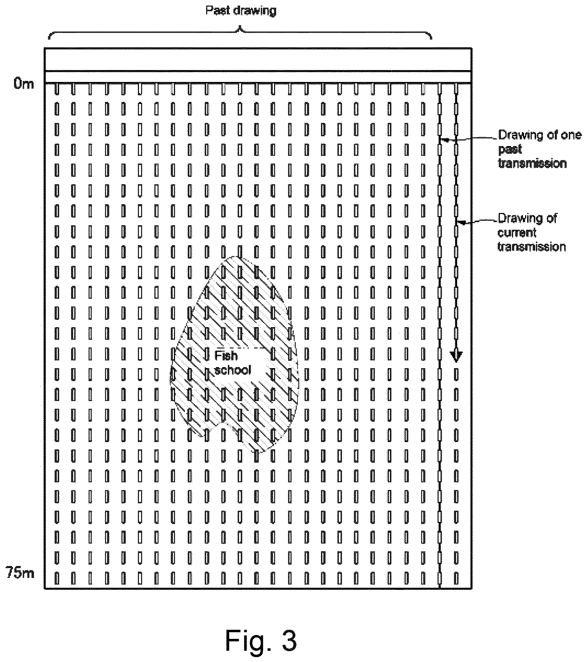

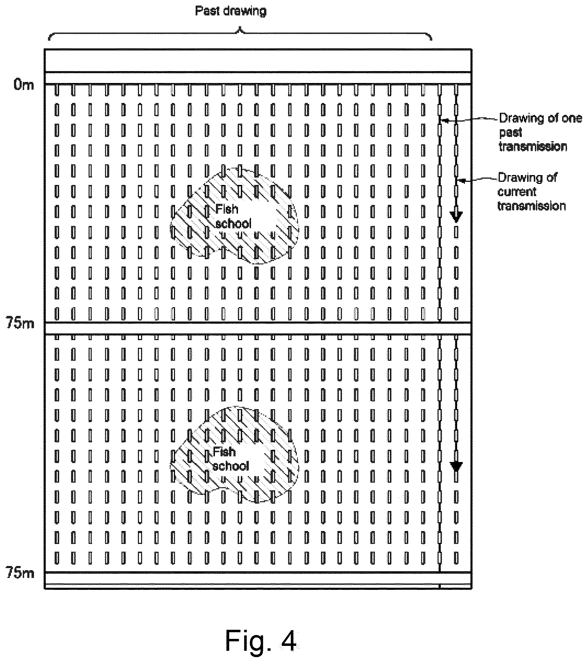

When trying to display an echo of a fish school in the sea or the like at a place where the seabed is sufficiently deep, the transmission period can be set to a fast transmission period assuming that there is no reflection echo from the seabed. For example, when transmission is performed 10 times per second, the transmission period is 0.1 seconds. However, a screen is displayed with an effective display range being a distance that an ultrasonic wave reciprocates during a time period (0.1 seconds) from the first transmission to the next transmission, that is, 75 m, which is half of a distance of 150 m obtained by multiplying the underwater sonic speed of 1500 m/s by 0.1 seconds. When the transmission period is 0.1 seconds, as illustrated in Fig. 3, a display range of 75 m or more does not exist. Even when it exists, as illustrated in Fig. 4, it is only a repeated display of a range from 0 m to 75 m.

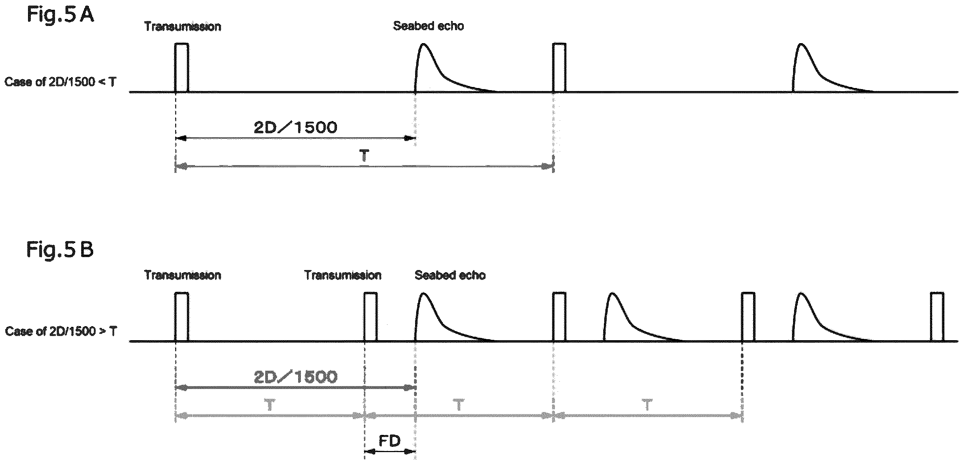

When a seabed depth is D, a transmission interval of transmission pulses is T, and (2D/1500) < T, as illustrated in Fig. 5A, a time difference between a transmission pulse and a reception echo corresponds to (2D/1500), and the depth can be measured from this time difference. However, when (2D/1500) $\geqq$ T, as illustrated in Fig. 5B, since a reception echo arrives after the next transmission pulse is transmitted, it is not possible to know which transmission pulse the reception echo corresponds to, and a wrong depth is measured based on a time difference (FD). Therefore, conventionally, the condition of (2D/1500) < T is required.

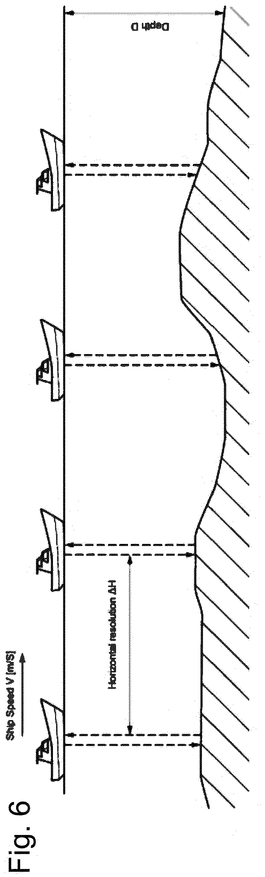

That the transmission period cannot be shortened means that a horizontal resolution of sounding cannot be reduced. A measurement resolution in a traveling direction (horizontal direction) of a ship is described below with reference to Fig. 6. A horizontal resolution ($\Delta$H) (m) in a case where sounding of a depth (D) (m) is performed at a ship speed (V) (m/s) is expressed by the following formula.

$$\Delta H = VT > 2DV/1500$$

For example, when the ship sails at 10 kt (10x1.852 km/hour) and the transmission period is 1 second, sounding data can be obtained only about every 5 m. To measure a seabed of a depth of 1,000 m, a transmission period (T) must be (1,000×2)/1,500 = 1.33 seconds or more. However, since the ship advances 6.7 m after 1.33 seconds when the ship sails at 10 kt, the measurement resolution ($\Delta$H) is 6.67 m.

With an underwater information display device such as a conventional fish finder, there is no way other than reducing the speed of the ship in order to improve the measurement resolution. Therefore, for a conventional fish finder, there is a problem that the time required for a measurement becomes long when the measurement resolution is increased.

As an underwater information display device that can solve such a problem, a device has been proposed in which, when an underwater sonic speed is Vu and a distance to a measurement target is D, a transmission pulse period is (2D/Vu) or less (see Patent Document 1). Such an underwater information display device can eliminate the conventional limitation ((2D/1500) < T) on the transmission period (T). That is, the horizontal resolution is as shown by the following equation.

$$\Delta H = VT$$

For example, when the ship is sailing at 10 kt (10×1.852 km/hour) and the transmission period is 0.01 seconds, ΔH = 0.05 m, and the horizontal resolution (measurement interval) can be determined regardless of a sounding depth. The horizontal resolution (ΔH) is determined only from the transmission period (T) and the ship speed (V) regardless of the depth. In this way, the transmission period (T) can be shortened, sounding is possible regardless of the depth, and a high horizontal measurement resolution can be obtained.

Related Art

Patent Document

Patent Document 1: Japanese Patent No. 6402224.

Summary of the Invention

Problems to Be Solved by the Invention

When such a transmission period (T) is shortened, there is a problem that, by the time an echo generated by a certain transmission ultrasonic wave reflected by a target is received, a reflection wave (hereinafter, referred to as a ghost as appropriate) different from an original echo is received, a display image becomes difficult to see, and it becomes an obstacle to capturing the target.
Therefore, a purpose of the present invention is to provide an underwater information display device that can solve such a problem.

Means for Solving the Problems

The present invention is an underwater information display device that transmits an ultrasonic wave, receives an echo reflected by an underwater target, and displays the echo. The underwater information display device includes:

a transmission signal generation part that forms a transmission signal sequence in which at least two temporally adjacent transmission signals are converted so as to be identifiable at the time of reception and have different intervals;
a transmission part that emits a transmission signal as an ultrasonic wave into water;
a reception part that receives an echo and outputs a reception signal;
a storage part that stores multiple reception signals corresponding to temporally continuous transmission signals;
an interpolation part to which reception signals stored in the storage part are supplied and which replaces a ghost component included in the reception signals with an echo of another temporally nearby transmission signal; and
a display part that draws reception signals including a signal interpolated by the interpolation part.

Effect of Invention

According to the present invention, a ghost of a transmission signal and a ghost of an echo can be removed. Therefore, a display can be made easy to see, and an underwater object hidden in a ghost can be displayed. The effects described herein are not necessarily limited, and may be any effect described in the present invention. Further, the content of the present invention is not to be interpreted in a limited manner by the effects exemplified in the following description.

Brief Description of Drawings

[Fig. 1] Fig. 1 is a schematic diagram illustrating an outline of a fish finder.

[Fig. 2] Fig. 2 is a schematic diagram illustrating a display method of a conventional fish finder.

[Fig. 3] Fig. 3 is a schematic diagram illustrating the display method of the conventional fish finder.

[Fig. 4] Fig. 4 is a schematic diagram illustrating the display method of the conventional fish finder.

[Fig. 5] Fig. 5A and 5B are schematic diagram illustrating an outline of an operation of the conventional fish finder.

[Fig. 6] Fig. 6 is a schematic diagram illustrating an outline of an operation of the conventional fish finder.

[Fig. 7] Fig. 7 is a block diagram of one embodiment of the present invention.

[Fig. 8] Fig. 8 is a schematic diagram for describing a display method of the one embodiment of the present invention.

[Fig. 9] Fig. 9 is a schematic diagram for describing the display method of the one embodiment of the present invention.

[Fig. 10] Figs. 10A, 10B and 10C are schematic diagrams for describing a problem of the conventional fish finder with a constant transmission period.

[Fig. 11] Figs. 11A and 11B are schematic diagrams used in describing the one embodiment of the present invention in which an interval between transmission signals varies.

[Fig. 12] Figs. 12A and 12B are schematic diagrams used in describing processing of the one embodiment of the present invention.

[Fig. 13] Fig. 13 is a block diagram illustrating a structure of an example of an interpolation part.

[Fig. 14] Figs. 14A, 14B, 14C and 14D are schematic diagrams used in describing an example of the interpolation part.

[Fig. 15] Fig. 15 is a schematic diagram used in describing another example of the interpolation part.

[Fig. 16] Fig. 16 is a block diagram illustrating a structure of another example of the interpolation part.

[Fig. 17] Fig. 17A and 17B are schematic diagram illustrating an effect of ghost removal by the present invention.

[Fig. 18] Figs. 18A and 18B are schematic diagrams for describing chirp signals used in another embodiment of the present invention.

[Fig. 19] Fig. 19A is a waveform diagram illustrating a transmission signal sequence of the other embodiment of the present invention, and Fig. 19B is a waveform diagram illustrating a waveform after correlation processing of the other embodiment of the present invention.

[Fig. 20] Fig. 20 is a schematic diagram illustrating an effect of ghost removal by the other embodiment of the present invention.

Mode for Carrying Out the Invention

In the following, embodiments of the present invention are described. The embodiments to be described below are preferred embodiments of the present invention and have various technically preferable limitations. However, the scope of the present invention is not to be limited to these embodiments unless specifically stated in the following description that the present invention is to be limited. In the following description, the seabed is assumed as an example of an underwater target. However, the present invention can be similarly applied to targets other than the seabed. In fact, since an echo from the seabed has a higher echo level than other objects such as fishes, a ghost of the seabed as a reception ghost becomes conspicuous, and removal of the ghost of the seabed is a problem to be solved. That is, a ghost having a large level among reception ghosts is particularly to be removed. Further, a ghost is also an echo. However, in this specification, an original reflection wave that arrives after being reflected by a target is referred to as an echo, and a reflection wave that is not the original reflection wave is referred to as a ghost.

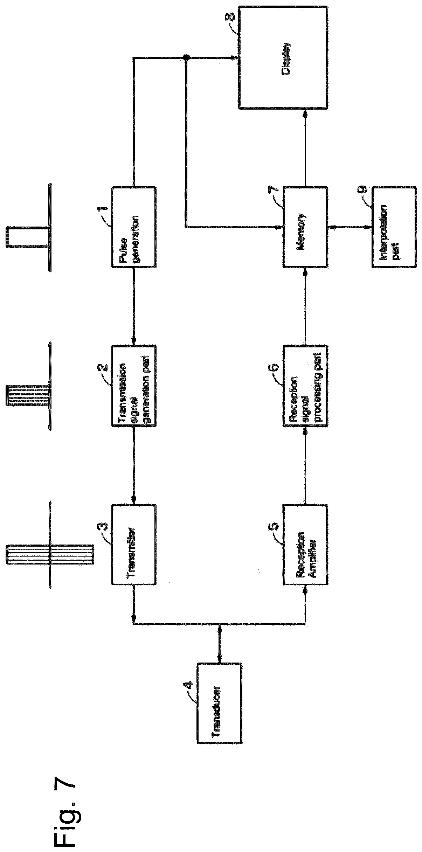

One embodiment of the present invention is described with reference to Fig. 7. As will be described later, a pulse generator 1 generates transmission trigger pulses with a varying interval. The transmission trigger pulses are supplied to a transmission signal generation part 2. The transmission signal generation part 2 forms a transmission signal sequence in which at least two temporally adjacent transmission signals are converted so as to be identifiable at the time of reception and have different intervals. For example, a pseudo noise sequence signal, for example, a gold code, is generated as a transmission pulse, and the transmission pulse is digitally modulated by pulse modulation, for example, BPSK (Binary Phase Shift Keying). A frequency of a carrier wave is several kHz -several hundred kHz. Further, the transmission trigger pulses are supplied to a display 8. The display 8 is a display device such as a color liquid crystal display.

The transmission signals with a varying interval generated by the transmission signal generation part 2 are supplied to a transmitter 3, and the transmitter 3 performs processing such as amplification. An output signal of the transmitter 3 is supplied to a transducer 4. An ultrasonic wave is emitted from the transducer 4 into the water. An echo of an emitted underwater ultrasonic wave is received by the transducer 4. For example, a transmission signal sequence is formed in which an interval between transmission signals alternates between T and T + ΔT.

Data received from the transducer 4 is supplied to a reception amplifier 5 and is subjected to processing such as amplification, and then, is supplied to a reception signal processing part 6. The reception signal processing part 6 subjects a reception signal to correlation processing by a pseudo noise sequence signal. When a transmission signal and a pseudo noise sequence signal of a reception signal match each other, a signal with a large value is generated, and a transmission signal and a corresponding reception signal can be identified. Further, a signal after correlation processing is transmitted to a memory 7.

As an example, in pulse modulation, one bit is formed of four periods, and each period is digitized using eight samples. Therefore, when a code of a gold code is 127 bits, one reception echo signal is (127x4x8 = 4064 bits). Correlation is detected by matching detection between this reception signal and a replica of 127 codes of a gold code (the replica is 4064 bits).

An output of the reception signal processing part 6 is supplied to a memory 7 having a memory area corresponding to a display area of the display 8. An output of the memory 7 is supplied to the display 8. A trigger pulse indicating a timing of a transmission pulse from the pulse generator 1 is supplied to the memory 7 and the display 8, and the display 8 displays an echo received with respect to the transmission pulse.

Further, an interpolation part 9 is provided in connection with the memory 7. The interpolation part 9 performs interpolation processing using reception data read from the memory 7, and performs processing to write an interpolation value to the memory 7. Confirmed signals are signals including signals after the interpolation processing.

A transmission trigger pulse is supplied to the display 8, and the timing of the transmission trigger pulse is displayed as a transmission line (0 m) on an upper side of the screen. An output signal from the memory 7 with respect to a transmission pulse is colored and displayed so as to extend from the transmission line. Here, the interval between the transmission pulses varies. However, even at the maximum interval, when the underwater sonic speed is Vu and the distance to the target is D, it is (2D/Vu) or less.

The underwater information display device described above can eliminate the conventional limitation ((2D/1500) <T) on the constant transmission period (T). That is, the horizontal resolution is as shown by the following equation.

$$\Delta H = VT$$

For example, when the ship is sailing at 10 kt (10×1.852 km/hour) and the transmission period (constant) is 0.01 seconds, ΔH = 0.05 m, and the horizontal resolution (measurement interval) can be determined regardless of a sounding depth. The horizontal resolution (ΔH) is determined only from the transmission period (T) and the ship speed (V) regardless of the depth. In this way, the transmission period (T) can be shortened, sounding is possible regardless of the depth, and a high horizontal measurement resolution can be obtained. The resolution of the display in the horizontal direction (time direction) in the display 8 can be increased. Therefore, even for a relatively small object in the sea, a shape thereof can be displayed on the screen.

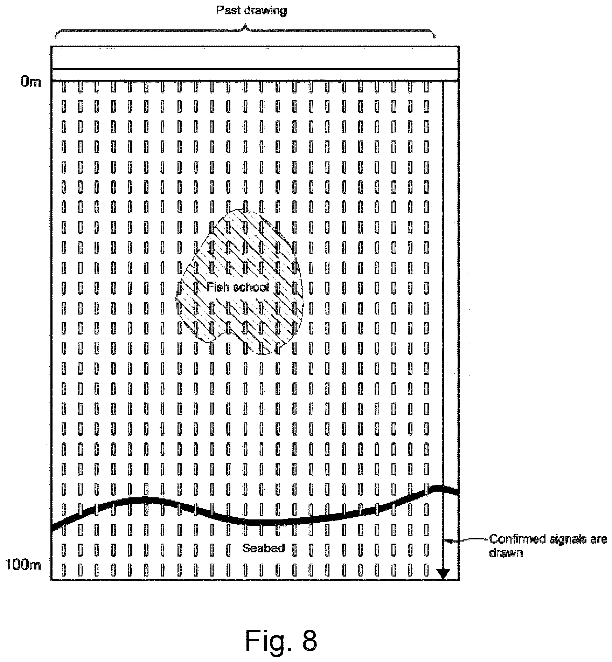

The display in the display 8 is described below. Fig. 8 illustrates a display method when the memory 7 is provided as in the one embodiment of the present invention. Multiple temporarily continuous transmission and reception signals are sequentially stored in the memory, and only confirmed signals are drawn (displayed). Unconfirmed signals are stored in the memory 7. Since the memory 7 corresponds to a display screen of the display 8, reception signals corresponding to multiple transmission signals can be simultaneously displayed in the display 8.

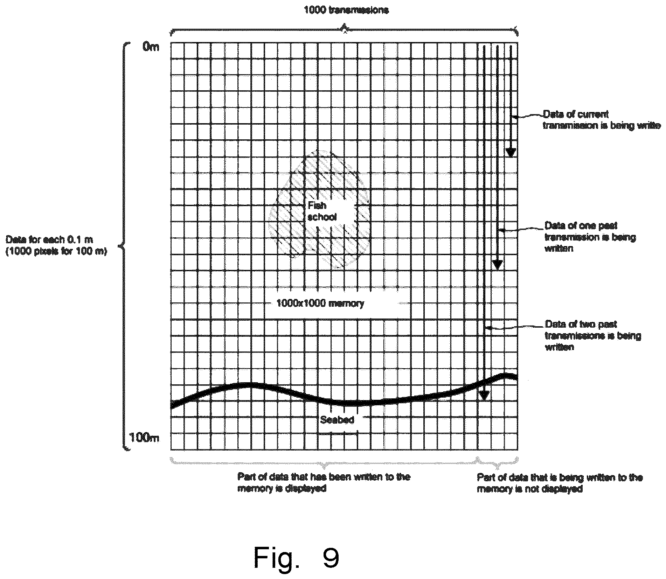

Fig. 9 illustrates an example of the memory 7. As an example, the memory 7 has a capacity that can store data of 1,000 transmissions. In one transmission, data for each 0.01 m can be stored. When displaying underwater at a depth of 100 m, data of 10,000 pixels is stored.

Fig. 9 illustrates, for example, a state in which reception data with respect to the current transmission, reception data with respect to one past transmission, and reception data with respect to two past transmissions are written to the memory 7. Further, the previous reception data has been subjected to interpolation processing and confirmed, and is stored in the memory 7. The confirmed data after the interpolation processing, which is a part of the reception data that has been written to and stored in the memory 7 (1000 - 3 = 997 sets of reception data in the example of Fig. 9), is displayed in the display 8.

In the above-described one embodiment of the present invention, since transmission can be performed with a number of transmissions 10 or more times that of the conventional fish finder, information obtained from this is also increased 10 or more times, and sea underwater information that could not be seen before can be obtained.

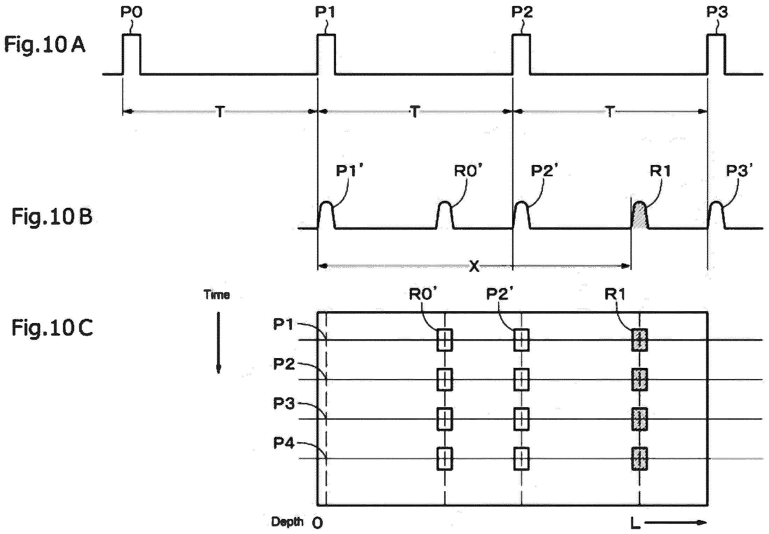

In the above-described underwater information display device, a ghost problem in a case where, unlike the present invention, the transmission interval is constant is described with reference to Figs. 10A - 10C. Fig. 10A illustrates transmission signals (P0, P1, P2, ⋯) transmitted with a constant transmission period (T). Fig. 10B illustrates reception signals received by a receiver. Further, Fig. 10C schematically illustrates a display image based on the reception signals. In Fig. 10C, a transmission line corresponding to the transmission signals (P0, P1, P2, ...) is a leftmost vertical line in Fig. 10C. Further, it is assumed that an echo of a target is received after a time (X) with respect to a transmission signal.

For example, with respect to the transmission signal (P1), a reception ghost (for example, a seabed ghost) (R0') with respect to the previous transmission signal (P0), a transmission ghost (P2') of the next transmission signal (P2), and an echo (R1), which is shaded, are sequentially generated. ' is used to indicate a ghost. A transmission ghost (P1') due to the transmission signal (PI) itself occurs at the same timing and thus can be ignored. However, the transmission ghost (P2') due to the transmission signal (P2) cannot be ignored. In this way, with respect to each transmission signal, a reception ghost, a transmission ghost, and an echo are sequentially generated. Therefore, on the display screen, in addition to the display corresponding to the echo, the reception ghost and the transmission ghost are displayed, which hinders cognition of the target by the echo.

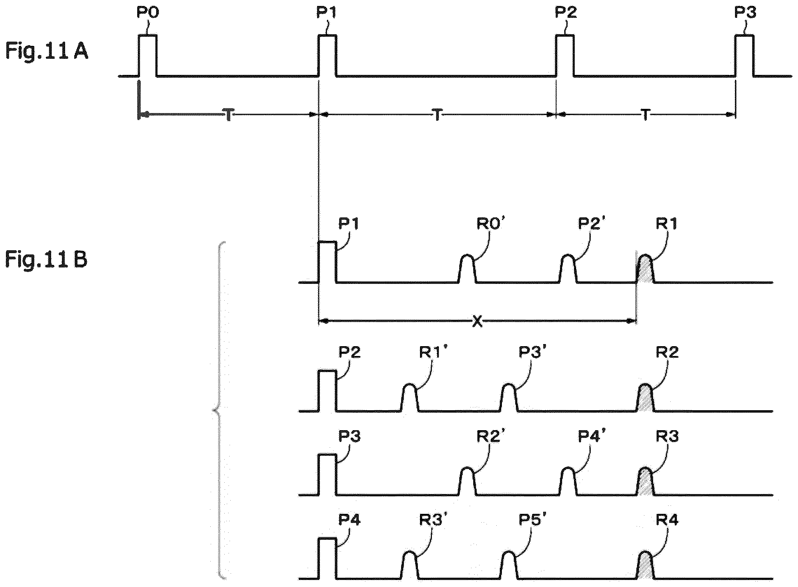

Fig. 11A is used in description of transmission signals of the one embodiment of the present invention, in which, for example, two intervals T and T + Δ alternately appear. Assuming that an echo from a target is received after a time (X), reception signals corresponding to the transmission signals (P1, P2, P3) are as illustrated in Fig. 11B. For simplicity of description, a target of a certain depth, for example, the seabed, is assumed.

That is, with respect to the transmission signal (P1), reception signals including a reception ghost (R0') corresponding to the previous transmission signal (P0), a transmission ghost (P2') due to the transmission signal (P2), and an echo (R1) are obtained. Further, with respect to the transmission signal (P2), reception signals including a reception ghost (R1') corresponding to the previous transmission signal (P1), a transmission ghost (P3') due to the transmission signal (P3), and an echo (R2) are obtained. Further, with respect to the transmission signal (P3), reception signals including a reception ghost (R2') corresponding to the previous transmission signal (P2), a transmission ghost (P4') due to the transmission signal (P4), and an echo (R3) are obtained. Further, with respect to the transmission signal (P4), reception signals including a reception ghost (R3') corresponding to the previous transmission signal (P3), a transmission ghost (P5') due to the transmission signal (P5), and an echo (R4) are obtained.

In this example in which the interval of the transmission signals alternately varies, echo and ghost arrangements of the reception signals with respect to the transmission signals (P1, P3, P5, ...) in the time direction match each other, and echo and ghost arrangements of the reception signals with respect to the transmission signals (P2, P4, P6, ...) in the time direction match each other. Therefore, the transmission ghost and the reception ghost can be removed by being replaced with reception data at temporally corresponding positions of previous (or later) transmission signals. The interpolation part 9 (see Fig. 7) performs interpolation processing of such pre-value (or post-value) holding. The interpolation processing is replacement processing in which a ghost is removed and a temporally nearby echo is added.

The time when a transmission ghost occurs is known when the transmission interval is known, and the time when a reception ghost occurs can also be known from the time when an echo occurs. Therefore, a ghost removal method in which a reception signal of a ghost part is forcibly set to zero data is also conceivable. In this method, an echo of a target such as a fish that exists at a position of a ghost is also removed, and thus, this method is not preferable. On the other hand, in the one embodiment of the present invention, the interpolation processing is performed. Therefore, high-precision detection and display can be performed without removing information of a target that exists at a position of a ghost. Further, a range in which the interpolation processing is performed is set to match a range in which a ghost exists and that is determined based on known information. Further, it is also possible that a level of a reception signal is monitored and the interpolation processing is performed within a range in which it is detected that a ghost of a predetermined level or higher exists.

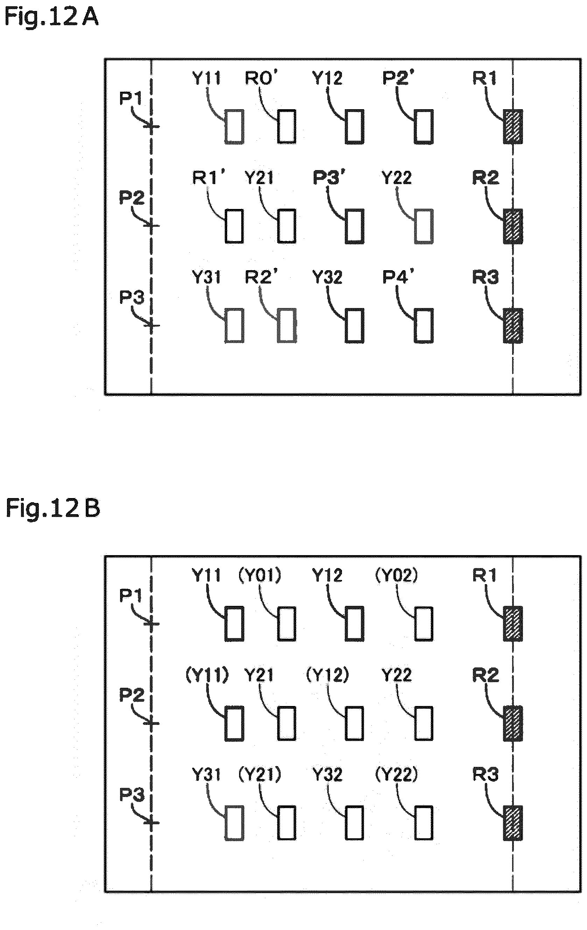

Figs. 12A and 12B illustrate a part of a display of the one embodiment of the present invention. Fig. 12A illustrates a display before the interpolation is performed, and Fig. 12B illustrates a display after the interpolation is performed. In Figs. 12A and 12B, the vertical and horizontal directions are interchanged with respect to those of the display of the display 8, the transmitting line is the leftmost vertical line in the drawings, and the horizontal direction is the depth direction.

Before the interpolation, with respect to the transmission signal (P1), the reception ghost (R0'), the transmission ghost (P2'), and the echo (R1) are sequentially arranged, and, with respect to the transmission signal (P2), the reception ghost (R1'), the transmission ghost (P3'), and the echo (R2) are sequentially arranged. At the same time as the reception ghost (R1') with respect to the transmission signal (P2), a reception signal (no signal or an echo) (Y11) exists with respect to the transmission signal (PI). Similarly, at the same time as the transmission ghost (P3'), a reception signal (Y12) exists with respect to the transmission signal (PI).

Therefore, as illustrated in Fig. 12B, the reception ghost (R1') is replaced by the reception signal (Y11), and a signal (Y11) same as the reception signal (Y11) is inserted in place of the ghost. The transmission ghost (P3') is replaced by the reception signal (Y12), and a signal (Y12) same as the reception signal (Y12) is inserted in place of the ghost. Other reception ghosts and transmission ghosts are also interpolated in the same way, and thus, an image with ghosts removed (Fig. 12B) can be displayed. Further, when a target exists at a position same as a ghost, a predicted value of an echo of the target can be displayed.

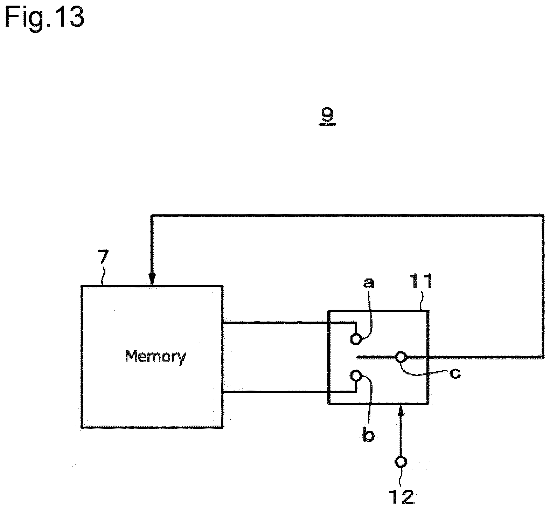

Fig. 13 illustrates an example of the interpolation part 9 that performs the pre-value holding as described above. The reception signal read from the memory 7 is supplied to input terminals (a, b) of a switch circuit 11. For example, a reception signal with respect to a transmission signal to be processed is supplied to one input terminal (a) of the switch circuit 11, and a processed (confirmed) reception signal is supplied to the other input terminal (b). A reception signal after interpolation is taken out to an output terminal (c) of the switch circuit 11, and this reception signal is written to the memory 7 as a processed reception signal. The switch circuit 11 is controlled by a switching signal from a terminal 12.

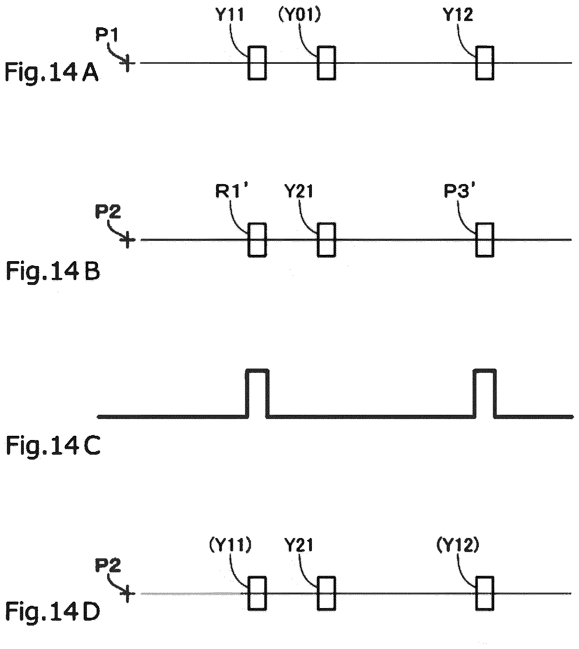

Fig. 14A illustrates processed reception signals (with respect to the transmission signal (PI)) stored in memory 7, and Fig. 14B illustrates reception signals (with respect to the transmission signal (P2)) to be processed. Switching signals as illustrated in Fig. 14C are supplied to the switch circuit 11 at the timing of the reception ghost (R1') and the timing of the transmission ghost (P3'). Reception signals after interpolation as illustrated in Fig. 14D are obtained from the switch circuit 11, and the reception signals after interpolation are written to the memory 7.

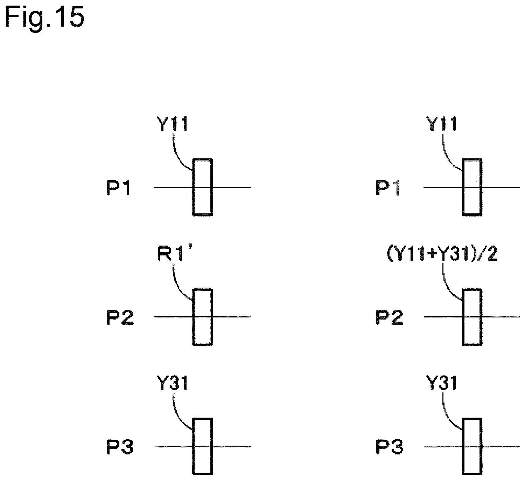

In the above description, an example of pre-holding as the interpolation processing is described. The interpolation processing is not limited to the pre-holding, and it is also possible that average value interpolation is adopted. As illustrated in Fig. 15, for example, it is also possible that the reception ghost (R1' ) is replaced by an average value (Y11+Y31)/2 of a reception signal (Y11) with respect to another (temporally earlier) transmission signal (PI) at the same position as the reception ghost (R1') and a reception signal (Y31) with respect to another (temporally later) transmission signal (P2) at the same position as the reception ghost (R1'). A transmission ghost is also similarly average value interpolated.

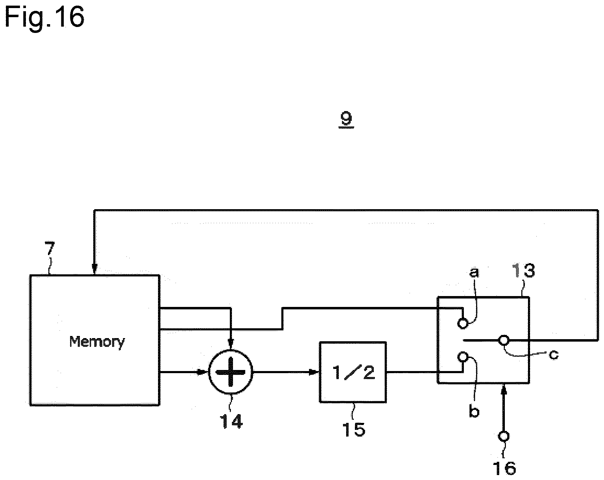

Fig. 16 illustrates an example of the interpolation part 9 performing average value interpolation. From the memory 7, reception signals with respect to three temporally continuous transmission signals are synchronously read out. A reception signal with respect to a transmission signal to be processed is supplied to one input terminal (a) of a switch circuit 13. Reception signals with respect to transmission signals before and after the transmission signal to be processed are read out from the memory 7 and are supplied to an additive circuit 14, and an additive output of the additive circuit 14 is supplied to a (1/2) multiplicative circuit 13. An average value signal of the previous and later reception signals is obtained from the (1/2) multiplicative circuit 13, and this average value signal is supplied to another input terminal (b) of the switch circuit 13.

The switch circuit 13 is controlled by a switching signal from a terminal 16. In a normal section, the input terminal (a) is selected and a reception signal is taken out to an output terminal (c). In a ghost section to be interpolated, the input terminal (b) is selected and an average value signal is taken out to the output terminal (c). The reception signal taken out to the output terminal (c) of the switch circuit 13 is returned to the memory 7 as a confirmed reception signal. In this way, a ghost is replaced by an average value signal, and ghost removal can be performed.

In the present invention, it is also possible that processing other than the pre-holding and the average value interpolation is used as the interpolation processing. For example, it is also possible to perform interpolation using four previous, later, left and right reception signals. Further, the interpolation part 9 is not limited to having the circuit (hardware) structures as illustrated in the block diagrams described above, and may be realized by software processing using a microprocessor. Further, as a method for varying the interval of the transmission signals, in addition to the method of switching between the two types of T and $T + \Delta$, transmission signals with three types of intervals of T, $T + \Delta$, and $T + 2\Delta$ may be used, or transmission signals with four or more types of intervals may be used. It is set such that reception signals with respect to other transmission signals temporally adjacent to positions (phases) of transmission ghosts exist.

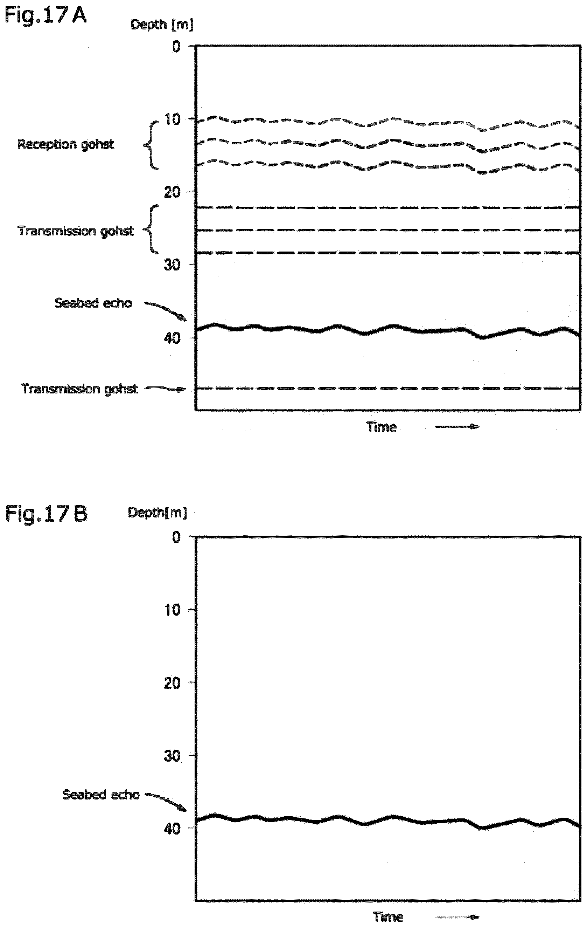

For example, when a transmission signal sequence with three types of intervals (IT, 1.1T, 1.2T) with a difference of about 10% is used, a reception image as illustrated in Fig. 17A is displayed before the ghost removal processing. For example, in addition to a seabed echo near 40m, 4 lines of transmission ghosts and 3 lines of reception ghosts are displayed. As illustrated in Fig. 17B, it is possible that the ghost component is removed by the present invention, and only the seabed echo is displayed. Therefore, the display image becomes easy to see, and further, a target such as a fish and a fish school can be clearly displayed.

Next, another embodiment of the present invention is described. In the above-described one embodiment, two temporally adjacent transmission signals are converted so as to be identifiable at the time of reception by being converted with different pseudo noise signals, and have different intervals. However, in the other embodiment, instead of the pseudo noise signals, chirp signals are used.

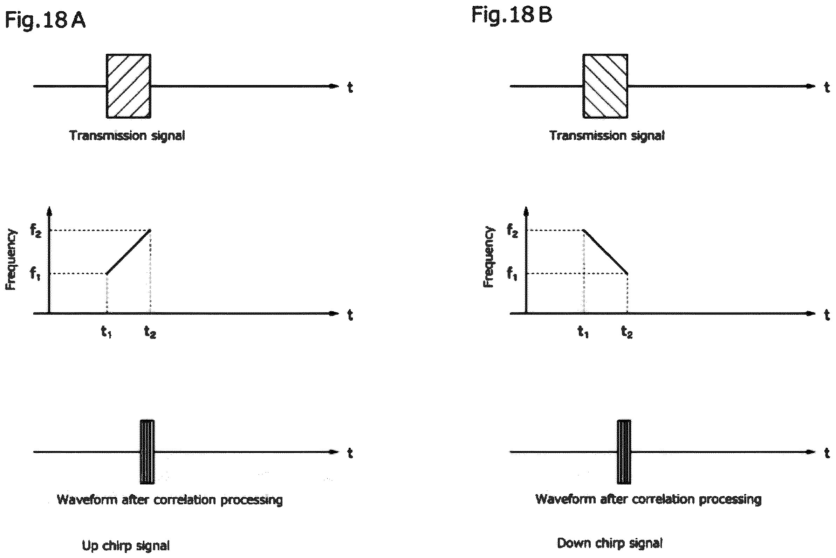

A linear FM (Frequency Modulation) signal referred to as an up chirp of which a frequency sweeps from a low frequency to a high frequency as illustrated in Fig. 18A and a linear FM signal referred to as a down chirp of which a frequency conversely sweeps from a high frequency to a low frequency as illustrated in Fig. 18B are alternately transmitted. On a receiving side, by subjecting reception signals to correlation processing, ghosts can be removed in the same way as in the one embodiment. By also subjecting the chirp signals to correlation processing, a correlation result similar to that of the pseudo noise signals can be obtained. That is, for an up chirp, a sharp peak can be obtained by correlating with a replica signal of the up chirp. However, for a down chirp signal, no peak appears.

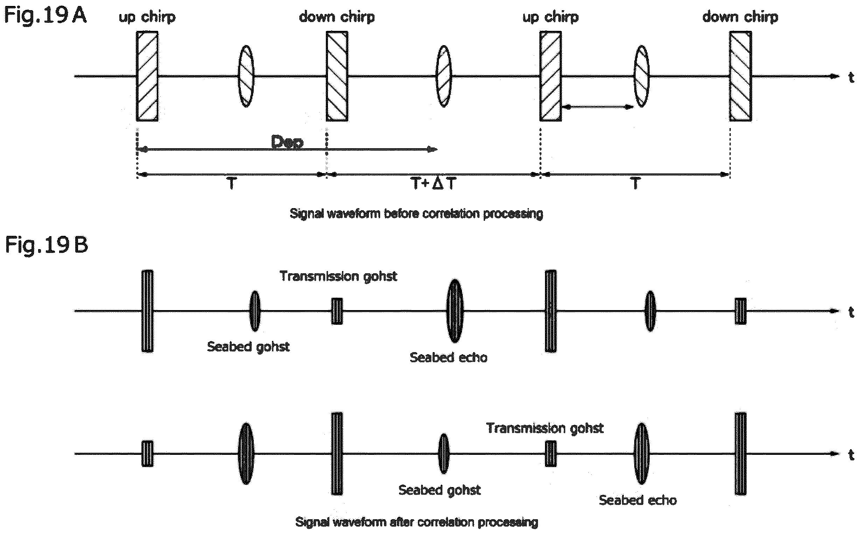

Fig. 19 illustrates a schematic diagram of this. Since an up chirp and a down chirp are alternately transmitted, when an up chirp is transmitted, a down chirp appears as a ghost between a transmission line and a seabed signal. As illustrated in Fig. 19A, a transmission interval is T seconds from an up chirp to a down chirp, and $T + \Delta T$ from a down chirp to an up chirp. In this case, an image is as illustrated in Fig. 19B, and is the same as Fig. 12 of the case where pseudo noise signals are used. Therefore, ghost removal processing can be performed using the same interpolation processing as in the one embodiment.

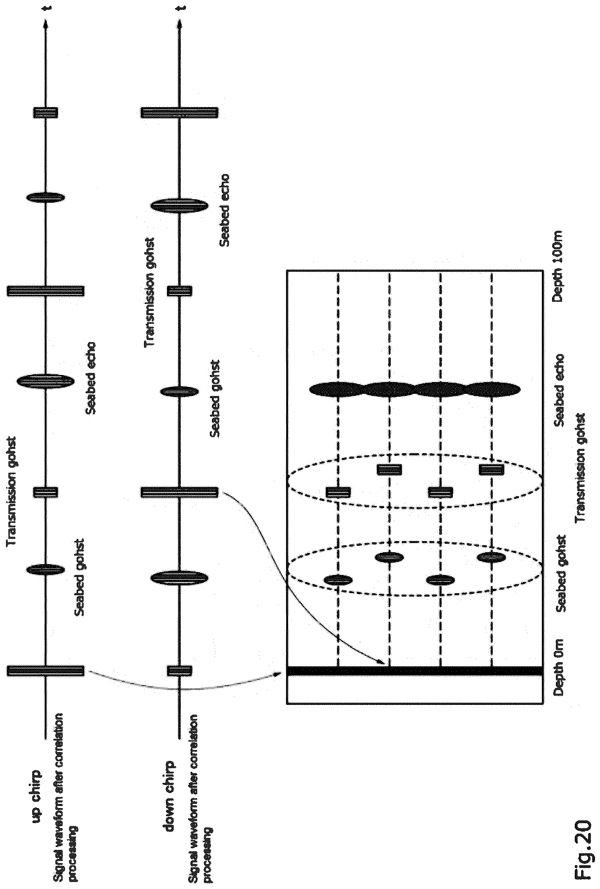

Fig. 20 is an example in which alternately transmitted up chirp signals and down chirp signals are received and imaged. When a reception signal level is colored and displayed from 0 m to a deep depth for each transmission, a down chirp reception signal (for example, the seabed) and a down chirp transmission signal that appear during an up chirp transmission have a lower signal level than an original echo, but appear on an image. However, by alternating varying the transmission period, positions where a seabed ghost and a transmission ghost appear are different, and thus they can be removed by interpolation processing. A method of the interpolation is the same as that in the one embodiment in which pseudo-noise signals are used.

As in the other embodiment, ghost removal can be performed using chirp signals as illustrated in Fig. 18 instead of the pseudo-noise signals. However, in the case of the chirp signals, there are only two types of signals, up chirp signals and down chirp signals, and it is not possible to prepare three or more types of transmission signals as in the case of the pseudo-noise signals. Therefore, it is not possible to perform interpolation processing by preparing three types of transmission periods that is performed using the pseudo-noise signals.

[Description of Reference Numerals]

1: pulse generator
2: transmission signal generation part
4: transducer
6: reception signal processing part
7: memory
8: display
9: interpolation part

**Claims**

1. An underwater information display device that transmits an ultrasonic wave, receives an echo reflected by an underwater target, and displays the echo, the underwater information display device comprising:

   a transmission signal generation part that forms a transmission signal sequence in which at least two temporally adjacent transmission signals are converted so as to be identifiable at the time of reception and have different intervals;
   a transmission part that emits the transmission signal as an ultrasonic wave into the water;
   a reception part that receives the echo and outputs a reception signal;
   a storage part that stores multiple reception signals corresponding to temporally continuous transmission signals;
   an interpolation part to which the reception signals stored in the storage part are supplied and which replaces a ghost component included in the reception signals with an echo of another temporally nearby transmission signal; and
   a display part that draws reception signals including a signal interpolated by the interpolation part.

2. The underwater information display device according to claim 1, wherein the transmission signals are signals converted into pseudo noise signals or chirp signals.

3. The underwater information display device according to claim 1 or 2, wherein in the transmission signal sequence, intervals of three or more temporally continuous transmission signals are different.

Seabed

Fig. 1

Fig. 2

Fig. 3

Fig. 4

Fig.5A

Case of 2D/1500 < T

Fig.5B

Case of 2D/1500 > T

Fig. 6

Fig. 7

Fig. 8

Fig. 9

Fig.10 A

Fig.10 B

Fig.10 C

EP 4 001 963 A1

Fig.11 A

Fig.11 B

Fig.12 A

Fig.12 B

Fig.13

Y11  (Y01)  Y12

P1

Fig.14 A

R1'  Y21  P3'

P2

Fig.14 B

Fig.14 C

(Y11)  Y21  (Y12)

P2

Fig.14 D

Fig.15

P1 ──── Y11

P2 ──── R1'

P3 ──── Y31

P1 ──── Y11

P2 ──── (Y11+Y31)/2

P3 ──── Y31

Fig.16

Fig.17 A

Depth [m]

Reception gohst

Transmission gohst

Seabed echo

Transmission gohst

Time

Fig.17 B

Depth[m]

Seabed echo

Time

# Fig.18 A

Transmission signal

Frequency

$f_2$

$f_1$

$t_1$   $t_2$

t

Waveform after correlation processing

Up chirp signal

# Fig.18 B

Transmission signal

Frequency

$f_2$

$f_1$

$t_1$   $t_2$

t

Waveform after correlation processing

Down chirp signal

Fig.19 A

up chirp

down chirp

up chirp

down chirp

t

Dep

T

T+△T

T

Signal waveform before correlation processing

Fig.19 B

Transmission gohst

Seabed gohst

Seabed echo

t

Signal waveform after correlation processing

Transmission gohst

Seabed gohst

Seabed echo

t

**up chirp**

Signal waveform after correlation processing

Transmission gohst

Seabed gohst

Seabed echo

t

**down chirp**

Signal waveform after correlation processing

Seabed gohst

Transmission gohst

Seabed echo

t

Depth 0m    Seabed gohst                    Seabed echo    Depth 100m

Transmission gohst

Fig.20

**INTERNATIONAL SEARCH REPORT**

| International application No. |
|---|
| PCT/JP2019/027904 |

**A. CLASSIFICATION OF SUBJECT MATTER**
Int.Cl. G01S15/10(2006.01)i, G01S7/526(2006.01)i

According to International Patent Classification (IPC) or to both national classification and IPC

**B. FIELDS SEARCHED**

Minimum documentation searched (classification system followed by classification symbols)
Int.Cl. G01S7/52-G01S7/64, G01S15/00-G01S15/96

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Microfilm of the specification and drawings annexed to the request of Japanese Utility Model Application No. 024248/1982 (Laid-open No. 149475/1982) (KODEN ELECTRONICS CO., LTD.) 20 September 1982, entire text, all drawings (Family: none) | 1-3 |
| A | JP 58-117473 A (ALOKA CO., LTD.) 13 July 1983, entire text, all drawings (Family: none) | 1-3 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 October 2019 (04.10.2019) | 21 October 2019 (21.10.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
|---|
| PCT/JP2019/027904 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 58-150878 A (MITSUBISHI ELECTRIC CORP.) 07 September 1983, entire text, all drawings (Family: none) | 1-3 |
| A | US 2018/0011190 A1 (MORALES, Hector et al.) 11 January 2018, entire text, all drawings (Family: none) | 1-3 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6402224 B